# EUROPÄISCHE PATENTSCHRIFT

(11) **EP 4 164 024 B1**
(45) Veröffentlichungstag und Bekanntmachung des Hinweises auf die Patenterteilung: **27.03.2024**
(21) Anmeldenummer: 21200993.0
(22) Anmeldetag: 05.10.2021
(51) Int. Cl.: H01M 10/44

(54) **VERFAHREN ZUM ENTLADEN EINER BATTERIEZELLE ODER EINES BATTERIE-MODULS MIT EINER DERARTIGEN BATTERIEZELLE UND ENTLADUNGS-ANLAGE**
METHOD FOR DISCHARGING A BATTERY CELL OR A BATTERY MODULE WITH SUCH A BATTERY CELL AND DISCHARGE SYSTEM
PROCÉDÉ DE DÉCHARGE D'UNE CELLULE DE BATTERIE OU D'UN MODULE DE BATTERIE DOTÉ D'UNE TELLE CELLULE DE BATTERIE ET INSTALLATION DE DÉCHARGE

(43) Veröffentlichungstag der Anmeldung: 12.04.2023
(73) Patentinhaber: Westsächsische Hochschule Zwickau, 08056 Zwickau (DE); Scholz Recycling GmbH, 04571 Rötha OT Espenhain (DE)
(72) Erfinder: Bodach, Mirko, 09353 Oberlungwitz (DE); Blumhagen, Christian, 08147 Crinitzberg (DE); Mosig, Patrick, 08056 Zwickau (DE); Zacharias, Lutz, 09437 Gornau (DE); Lehmann, Ringo, 08066 Zwickau (DE); Jungandreas, Carsten, 09337 Callenberg (DE); Weissflog, Kay, 04571 Rötha (DE); Giessner, Philipp, 04229 Leipzig (DE); Wuschke, Lutz, 04720 Westewitz/Grossweitzschen (DE)
(74) Vertreter: Bremer, Ulrich

(56) Entgegenhaltungen:
- CN-A- 113 161 639
- CN-B- 106 207 297

## Beschreibung

Die vorliegende Erfindung betrifft ein Verfahren zum Entladen einer Batteriezelle oder eines Batterie-Moduls mit einer derartigen Batteriezelle, beispielweise Li-lonen-Batteriezelle, sowie eine Entladungs-Anlage zur Durchführung des Verfahrens.

Die Dokumente CN113 161 639 und CN106 207 297 offenbaren Vorrichtungen und Verfahren zur vollständigen Entladung von Li-lonen Batterien.

Aufgrund der steigenden Nachfrage nach wieder aufladbaren Batterie-Modulen (Akkumulatoren), insbesondere mit Li-Ionen-Batteriezellen, sowohl für netzunabhängige, elektronische Kleingeräte (Kopfhörer, Handys, etc.) als auch für Elektro-Fahrzeuge (Traktionsbatterien) bzw. konventionelle Fahrzeuge (Starterbatterien) oder als Energiespeicher z. B. für Photovoltaikanlagen oder als Pufferspeicher für Energiespitzen werden zukünftig erhöhte Mengen an zu recycelnden Li-Batteriezellen anfallen, wenn diese ihr Lebensende erreicht haben. Das ist zumeist nach 8-10 Jahren der Fall, wenn die Kapazität der Batteriezellen auf 80 % oder weniger degradiert ist.

Bei der Aufbereitung der Altbatterien wurden mechanische Recyclingrouten konzipiert und realisiert. Im Rahmen dieser Aufbereitungsszenarien, sind normalerweise eine Reihe von mechanischen, elektrischen und chemischen bzw. thermischen Prozessen vorgesehen, die dazu dienen, die Batterie-Module bzw. die Batteriezellen in ihre Einzelteile zu zerlegen und dabei das elektrische Gefährdungspotential, das insbesondere durch Brände, Explosionen und daraus resultierender Schadstoffemissionen ausgeht, zu minimieren. Zu den elektrischen Prozessen zählt insbesondere eine vorbereitende Entladung der Batterie-Module bzw. der darin enthaltenen Batteriezellen zumindest bis zu einer Entladeschlussspannung und insbesondere auch eine Tiefenentladung bis zu einer Zellen-Spannung von 0 V, und zu den mechanischen Prozessen insbesondere eine vorbereitende Demontage, eine mechanische Zerkleinerung sowie eine nachfolgende Sortierung/Klassierung mit entsprechender Abführung der jeweils erhaltenen Komponenten.

Für die mechanischen Prozesse, die teilweise manuell durch Personal durchgeführt werden, ist es nötig, dass die Batteriezellen vorher entladen, insbesondere tiefenentladen werden, da sonst zumindest im Modulverbund ein elektrisches Gefährdungspotential gegeben ist, wenn eine Restspannung über die jeweilige Person abgeführt wird. Des Weiteren kann es bei der Demontage zu einer unbeabsichtigten Überbrückung zwischen einer oder mehreren Zellenpolen kommen, z. B. durch Werkzeug, Armbanduhren etc., wodurch infolge der resultierenden Kurzschlussströme eine starke Erwärmung der Kurzschlussbrücke erfolgt und somit ein weiteres elektrisches Gefährdungspotential (starke Verbrennungen) vorliegt. Weiterhin kann es bei den mechanischen Prozessen zu Kurzschlüssen oder anderen Spannungsüberträgen kommen, die bei der mechanischen Aufbereitung unerwünscht sind, da sich das zerkleinerte beispielsweise geschredderte Material sonst entzünden kann.

Dabei kann es nach einer Tiefenentladung auf eine Zellen-Spannung von 0 V zu Relaxationseffekten kommen, wodurch sich im Nachgang an die Tiefenentladung eine erhöhte Relaxations-Spannung einstellt, die üblicherweise zwischen 50% und 75% der Nennspannung der Batteriezelle liegt, so dass die Batteriezellen nachfolgend auch weiterhin als unter Spannung stehende Bauteile zu behandeln sind und daher ggf. entsprechende Schutzausrüstung zu tragen ist und auch weitere Vorkehrungen zur Brandvermeidung bei der weiteren Aufbereitung zu treffen sind.

Das Problem der Funkenbildung und ggf. der Entzündung brennbarer Stoffe im Elektrolyten der Batteriezellen wird dabei aktuell dadurch vermieden, dass der Zerlegungs- bzw. Mahlprozess unter einer Schutzgasatmosphäre, wie z.B. CO2, stattfindet. Ein weiteres bekanntes Verfahren ist die Entladung der Batteriezellen in salzhaltigen, leitfähigen Lösungen. Hierbei wird die Leitfähigkeit des Eintauchmediums genutzt um einen Entladevorgang herbeizuführen und die Batteriezelle gleichzeitig zu kühlen. Weiterhin ist bekannt, einzelne Batteriezellen in einem flüssigen Medium mittels einwirkender Schockwellen aufzutrennen. Dabei wird die Batteriezelle durch intensive Druckwellen in ihre Einzelteile zerlegt, welche danach in Prozessen aus dem flüssigen Medium abgesondert werden können.

Allen bisher aufgeführten Verfahren ist gemein, das die Batteriezellen zuvor entladen werden und das elektrische Gefährdungspotential (Funkenbildung, Erwärmung, Brand, etc.) beim weiteren Aufbereiten durch ein zusätzliches "Schutzmedium" verringert oder vermindert wird. Danach ist es wiederum ggf. nötig dieses "Schutzmedium" vom Recyclingobjekt zu trennen, was sehr aufwändig sein kann.

Aufgabe der vorliegenden Erfindung ist es, ein Verfahren bzw. eine Entladungs-Anlage anzugeben, mit dem bzw. mit der die zu recycelten Batteriezellen (separat oder in Batterie-Modulen) in einfacher Weise in einen Zustand gebracht werden können, in dem sie mit geringem elektrischen Gefährdungspotential weiterverarbeitet bzw. aufbereitet werden können.

Diese Aufgabe wird erfindungsgemäß durch ein Verfahren nach Anspruch 1 sowie eine Entladungs-Anlage gemäß dem weiteren unabhängigen Anspruch gelöst. Die Unteransprüche beschreiben bevorzugte Weiterbildungen.

Erfindungsgemäß sind demnach in einem Verfahren zum Entladen mindestens einer Batteriezelle oder eines Batterie-Moduls mit einer derartigen Batteriezelle, mindestens die folgenden Schritte vorgesehen:
- Bereitstellen der mindestens einen Batteriezelle als separate Batteriezelle oder als Bestandteil eines Batterie-Moduls, so dass sowohl bereits demontierte Batteriezellen als auch die noch nicht demontierten Batterie-Module, die auch als Bestandteil von Batterie-Packs vorliegen können, dem Entladeprozess zur Verfügung gestellt werden;
- Bringen der mindestens einen bereitgestellten Batteriezelle in eine Konditionierungseinheit derartig, dass die mindestens eine Batteriezelle von einem Kühlmedium in der Konditionierungseinheit zumindest teilweise umgeben ist, um die Zellen-Temperatur der mindestens einen Batteriezelle während des Entladens unterhalb einer Grenz-Temperatur, beispielweise unterhalb 50°C, zu halten;
- Einstellen eines kontinuierlichen Entladestroms durch eine mit der mindestens einen Batteriezelle verbundenen Entlade-Stromquelle und Einleiten des Entladestroms in die mindestens eine Batteriezelle, so dass sich die Batteriezelle entlädt, wobei die Zellen-Spannung dabei zunächst unter die Entladeschluss-Spannung sinkt und anschließend auf ca. 0 V, was einer Tiefenentladung entspricht;
- Aufrechthalten des Entladestroms derartig, dass (ab einem ersten Zeitpunkt) eine Zellen-Spannung der mindestens einen Batteriezelle negativ wird, so dass sich die mindestens eine Batteriezelle negativ auflädt, wobei das Einleiten des Entladestroms in die mindestens eine Batteriezelle (zu einem dritten Zeitpunkt) abgebrochen wird, wenn die Zellen-Spannung für eine definierte Haltedauer (Zeitdauer zwischen dem ersten und dem dritten Zeitpunkt) negativ war und/oder wenn eine Energiemenge, die während des Vorliegens der negativen Zellen-Spannung (zwischen dem ersten und dem dritten Zeitpunkt) in die mindestens eine Batteriezelle eingeleitet wird, einen festgelegten Energie-Grenzwert erreicht oder überschreitet;
- Warten für eine Verweildauer, nachdem das Einleiten des Entladestroms abgebrochen wurde und anschließendes Durchführen weiterer Aufbereitungs-Schritte im Rahmen eines Aufbereitungs-Verfahrens zum Recyceln der Batteriezelle.

Vorteilhafterweise wird also durch das Halten des in die Batteriezelle eingeleiteten Entladestroms gezielt eine Gegenspannung bzw. negative Zellen-Spannung aufgebaut und die jeweilige Batteriezelle quasi "negativ" bzw. "verpolt" aufgeladen und die Zellen-Spannung dadurch auch weit unterhalb die normalerweise bei einer Tiefenentladung vorliegende Zellen-Spannung von 0 V gebracht. Dadurch erfolgt eine gezielte Beschädigung der jeweiligen Batteriezelle, wobei sich durch das nachfolgende Halten der Zellen-Spannung auf einem gewissen Spannungsniveau auf kontrollierte Weise interne Kurzschlüsse ausbilden und der Batteriezelle die elektrische und die chemische Restenergie gänzlich entzogen wird bzw. diese so verringert wird, dass ein elektrisch gefährlicher Zustand nicht mehr eintreten kann. Elektrische und chemische Prozesse, die innerhalb der jeweiligen Batteriezelle für einen nachfolgenden Relaxationsprozess sorgen können, werden durch das erfindungsgemäße "negative Aufladen" und das Halten der negativen Ladung auf diesem Niveau also weitestgehend unterbunden. Auf diese Weise kann je nach Länge der Haltedauer bzw. nach Höhe der aufgenommene Energiemenge ein durch die Selbstentladung der Batteriezelle zu erreichender Wert, an den sich die Zellen-Spannung nach dem Entladevorgang annähern oder den sie unterschreiten soll, sehr gering gewählt werden, vorzugsweise unterhalb von 0,1V, insbesondere unterhalb von 0,05V.

Dadurch kann nach dem Abwarten eines zulässigen Relaxations-Maximums, auf das die Zellen-Spannung nach dem Abschalten der Entladespannung, aufgrund von noch immer auftretenden geringen Relaxationseffekten temporär ansteigen kann, auf Schutzausstattung verzichtet werden und auch die Gefahr eines Zellbrandes beim nachfolgenden Mahlen oder während der weiteren Aufbereitung wird drastisch reduziert. Gegebenenfalls lassen sich nachfolgende Arbeitsschritte vereinfachen, da Schutzmedien entfallen, z.B. Schutzgas, und der Recyclingprozess kann direkt nach dem Entladevorgang bzw. nach Ablauf der Verweildauer stattfinden, so dass Zeit gespart werden kann.

Zusammenwirkend damit kann durch das zusätzliche Kühlen der Batteriezelle durch das Kühlmedium die durch das anfängliche Tiefenentladen auf 0 V und das anschließende negative Aufladen der Batteriezelle entstehende Wärme in der Batteriezelle, die insbesondere durch die intern ausgebildeten Kurzschlüsse und das Entziehen der elektrischen und der chemischen Restenergie aus der Batteriezelle entsteht, gezielt abgeführt werden, wodurch Zellbrände beim erfindungsgemäßen Entladevorgang vermieden werden können. Wird als Kühlmedium Wasser, insbesondere deionisiertes Wasser, verwendet, kann insbesondere ein aufwändiges Entfernen des Kühlmediums nach dem Entladeprozess vermieden werden. Weiterhin können mit deionisiertem Wasser unerwünschte chemische Reaktionen, insbesondere auch Oxidationseffekte, an der Batteriezelle oder in der Umgebung der Batteriezelle beim gegenpoligen Aufladen vermieden werden.

Vorzugsweise ist weiterhin vorgesehen, dass die Haltedauer und/oder der Energie-Grenzwert und/oder die Verweildauer in Abhängigkeit eines Zellen-Typs (z.B. auf Lithiumeisenphosphat oder auf Lithium-Nickel-Mangan-Cobalt-Oxiden basierend) der zu entladenen Batteriezelle und/oder in Abhängigkeit des von der Entlade-Stromquelle eingestellten Entladestroms und/oder in Abhängigkeit eines zeitlichen Verlaufes des an die Batteriezelle gelieferten Entladestroms festgelegt wird. Dadurch kann der Entladevorgang gezielt an die jeweils zu entladene Batteriezelle angepasst werden, da der Relaxationsprozess in dieser je nach Aufbau der Batteriezelle unter Umständen anders ablaufen kann und die jeweilige Batteriezelle bei unterschiedlichen Entladeströmen und je nach aufgenommener Energiemenge auch in anderen Maßen beschädigt wird. Vorzugsweise sind dabei bei Batteriezellen des Li-Ionen-Typs und aufgebauten negativen Zellen-Spannungen von bis zu ca. -3V bzw. Entladeströmen von beispielweise 20A bei einer 60 Ah Pouchzelle mit einer Haltedauer von mind. 3 Minuten bzw. aufgenommen Energiemengen von mindestens 1% der Nennkapazität vorgesehen.

Werden hierbei Batteriezellen als Bestandteile von Batterie-Modulen verwendet, ist entsprechend statt der Zellen-Spannung die Modul-Spannung zu betrachten, die sich je nach interner Verschaltung unmittelbar aus der Zellen-Spannung in den einzelnen Batteriezellen ergeben.

Vorzugsweise ist weiterhin vorgesehen, dass die Verweildauer in Abhängigkeit davon festgelegt wird, ob sich die Zellen-Spannung der mindestens einen Batteriezelle innerhalb einer Toleranz, z.B. mit maximal 10% Abweichung, an einen festgelegten Entlade-Wert angenähert oder diesen unterschritten hat. Dadurch kann eine gezielte Überwachung erfolgen, ob die jeweilige Batteriezelle ausreichend entladen ist, bevor diese weiterverwendet wird, wobei der Entlade-Wert beispielsweise vorab für den jeweiligen Zellen-Typ bzw. die jeweilige Batteriezelle festgelegt wurde. Vorzugsweise können sich dabei Entlade-Werte von kleiner gleich 0,1V, vorzugsweise kleiner gleich 0,05V ergeben. Bei derartigen Zellen-Spannungen geht nur noch eine sehr geringe elektrische Gefahr von diesen im weiteren Aufbereitungsprozess aus.

Vorzugsweise ist weiterhin vorgesehen, dass anstatt/trotz einer Spannungsmessung eine definierte Verweildauer von wenigen Minuten bis maximal 24h, vorzugsweise weniger als 1h, insbesondere zwischen 5min und 30min, festgelegt wird, in welcher sich die mindestens eine Batteriezelle nach Abschalten des Entladestroms in Leerlauf oder auch im kurzgeschlossenen Zustand befindet und nach der sich erfahrungsgemäß garantiert eine derartig geringe Zellen-Spannung ergibt, bei der von den Batteriezellen nur noch eine geringe elektrische Gefährdung für den nachfolgenden Aufbereitungsprozess ausgeht

Vorzugsweise kann dazu ergänzend vorgesehen sein, dass die Verweildauer in Abhängigkeit einer Relaxationsdauer festgelegt wird, innerhalb derer die Zellen-Spannung auf ein Relaxations-Maximum ansteigen wird, nachdem das Einleiten des Entladestroms abgebrochen wurde. Daher wird berücksichtigt, dass noch immer Relaxationseffekte auftreten können, die nach dem Abschalten des Entladestroms zu einem temporären Anstieg der Zellen-Spannung führen, bevor dann ab Erreichen des Relaxations-Maximums die Selbstentladung der Batteriezelle überwiegt. Zum Verringern des elektrischen Gefährdungspotentials kann zumindest das Erreichen dieses Relaxations-Maximums abgewartet werden. Vorzugsweise kann dazu vorgesehen sein, dass die Relaxationsdauer, d.h. die Zeit bis zum Erreichen des Relaxations-Maximums, in Abhängigkeit eines Zellen-Typs der zu entladenen Batteriezelle und/oder in Abhängigkeit des von der Entlade-Stromquelle eingestellten Entladestroms aus Kennwerttabellen eingelesen wird oder durch Messen der Zellen-Spannung ermittelt wird, nachdem das Einleiten des Entladestroms abgebrochen wurde. Es kann also eine auf Erfahrungswerten basierende Relaxationsdauer herangezogen werden oder aber eine direkte Messung erfolgen.

Vorzugsweise ist weiterhin vorgesehen, dass die mindestens eine Batteriezelle je nach Zellen-Typ und basierend auf Erfahrungswerten bereits nach der Abschaltung des Entladestroms oder erst nach dem Ablauf der Relaxationsdauer oder der Verweildauer aus der Konditionierungseinheit entnommen wird. Demnach wird also bei der Weiterverarbeitung vorteilhafterweise gewartet, bis die elektrische Gefahr, die von der Batteriezelle ausgeht, entsprechend minimiert wurde. Im Entladungsvorgang verursachte thermische Prozesse, die unmittelbar nach der negativen Aufladung bzw. dem Abschalten des Entladestromes noch zu einer Entzündung führen könnten, werden durch das Kühlmedium zudem unterbunden, wobei das Kühlmedium innerhalb der Verweildauer auch zusätzlich noch für eine ausreichende Abkühlung der Batteriezelle sorgt. Ferner kann die in der Batteriezelle aufgrund der thermischen Prozesse noch vorhandene thermische Energie beispielsweise zunächst für einen Trocknungsschritt genutzt werden, bevor zur weiteren Aufbereitung weitere Schritte folgen.

Vorzugsweise ist weiterhin vorgesehen, dass die Entlade-Stromquelle vor dem Einbringen der mindestens einen Batteriezelle in die Konditionierungseinheit mit der mindestens einen Batteriezelle energieleitend verbunden wird. Dadurch kann ein sicherer und einfacher Kontaktierungsprozess gewährleistet werden, da die entsprechenden Kabel nicht durch das Kühlmedium hindurch an die Batteriezelle anzuschließen sind, sondern vorbereitend bereits zuvor.

Vorzugsweise ist weiterhin vorgesehen, dass für den Fall,
- dass die mindestens eine Batteriezelle separat bereitgestellt wird, eine Demontage von Peripherie bereits zuvor stattfindet, wobei dann im Demontageschritt noch entsprechende Schutzvorkehrungen zu treffen sind, oder
- dass die mindestens eine Batteriezellen als Bestandteil eines Batterie-Moduls bereitgestellt wird, eine Demontage frühestens nachdem das Einleiten des Entladestroms abgeschlossen wurde stattfindet, d.h. die Demontage bereits unter verringertem elektrischen Gefährdungspotential stattfinden kann. Demnach kann je nach Anwendung auch bereits der Demontageschritt mit entladenen Energiezellen und damit geringerem elektrischen Gefährdungspotential stattfinden, oder aber lediglich der oder die nachfolgende(n) thermische(n) Behandlungsschritt(e) sowie die mechanischen Zerkleinerungs- und Klassierungsschritte.

Erfindungsgemäß ist auch eine Entladungs-Anordnung zum Entladen von Batteriezellen, beispielsweise als Bestandteil einer Aufbereitungs-Anordnung zum Recyceln von Batteriezellen vorgesehen, wobei die Batteriezelle eine separate Batteriezelle oder Bestandteil eines Batterie-Moduls ist, mindestens aufweisend:
- eine Konditionierungseinheit mit einem Kühlmedium zum Aufnehmen mindestens einer bereitgestellter Batteriezelle derartig, dass die mindestens eine Batteriezelle von dem Kühlmedium in der Konditionierungseinheit zumindest teilweise umgeben ist, so dass die Zellen-Temperatur der mindestens einen Batteriezelle während des Entladens unterhalb einer Grenz-Temperatur gehalten werden kann;
- eine Entlade-Stromquelle mit einem positiven Anschluss und einem negativen Anschluss, die ausgebildet ist, einen Entladestrom einzustellen und in die jeweilige mit der Entlade-Stromquelle verbindbare Batteriezelle einzuleiten, so dass die jeweilige Batteriezelle entladen werden kann, wobei die Entlade-Stromquelle ferner ausgebildet ist, den Entladestrom derartig zu halten, dass eine Zellen-Spannung der mindestens einen Batteriezelle negativ wird, und das Einleiten des Entladestroms in die mindestens eine Batteriezelle abzubrechen, wenn die Zellen-Spannung für eine definierte Haltedauer negativ ist und/oder wenn eine Energiemenge, die während des Vorliegens der negativen Zellen-Spannung in die mindestens eine Batteriezelle einleitbar ist, einen festgelegten Energie-Grenzwert erreicht oder überschreitet. Damit wird auch eine Anlage zur Durchführung des Verfahrens bereitgestellt, aus der die entladene Batteriezelle nach zusätzlichem Abwarten der Verweildauer mit geringerem elektrischen Gefährdungspotential entnommen bzw. weiteren Prozessschritten zugeführt werden kann.

Die Erfindung wird nachstehend anhand von Ausführungsbeispielen näher erläutert. Es zeigen:
- Fig. 1: eine schematische Ansicht einer Entladungs-Anordnung;
- Fig. 2: ein Flussdiagramm eines Verfahrens zum Entladen von zu recycelnden Batteriezellen; und
- Fig. 3, 4, 5, 6: zeitliche Verläufe einer Zellen- bzw. Modul-Spannung im Entladeprozess.

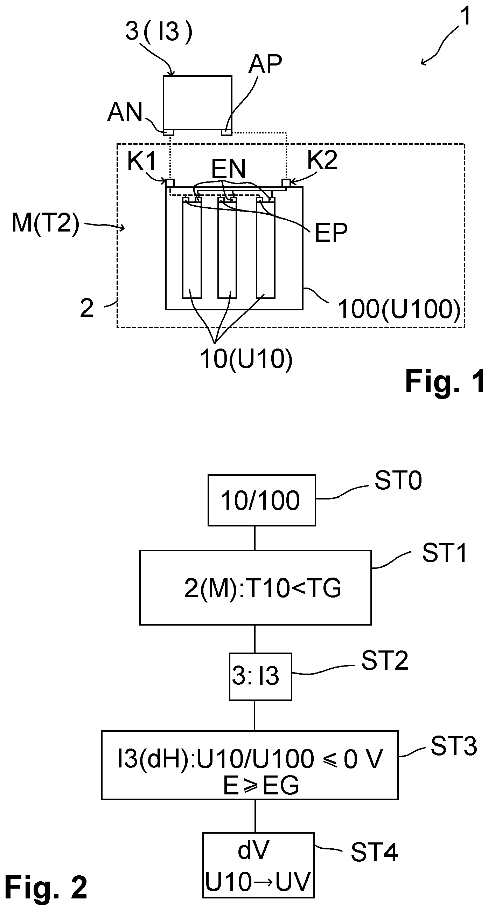

In Fig. 1 ist stark schematisiert eine Entladungs-Anordnung 1 zum Entladen von zu recycelnden Batteriezellen 10, insbesondere Li-Ionen-Batteriezellen, dargestellt. Die Batteriezellen 10, z.B. als Pouchzellen oder Rundzellen oder prismatischen Zellen, sind dabei Bestandteil eines zu recycelnden Batterie-Moduls 100, das wiederum Bestandteil eines zu recycelnden Batterie-Packs aus mehreren Batterie-Modulen 100 sein kann. Sind in einem Batterie-Modul 100 mehrere Batteriezellen 10 vorgesehen, wie üblich, sind diese in entsprechender Weise miteinander verschaltet, beispielsweise in einer Reihen- oder in einer Parallelschaltung.

In der jeweiligen Batteriezelle 10 gespeicherte Energie kann im normalen Betrieb (vor dem Recycling) über eine negative Elektrode EN und eine positive Elektrode EP der jeweiligen Batteriezelle 10 an einen Verbraucher abgegeben werden, der dadurch entsprechend mit Energie versorgt wird. Die Elektroden EN, EP einer im Batterie-Modul 100 angeordneten Batteriezelle 10 sind dabei mit Modul-Kontakten K1, K2 des Batterie-Moduls 100 entsprechend energieleitend verbunden. Über die Modul-Kontakte K1, K2 kann ein Verbraucher an das Batterie-Modul 100 angeschlossen und entsprechend versorgt werden. Die dem Verbraucher zur Verfügung gestellte Energie richtet sich dabei nach einer Zellen-Spannung U10, die jede Batteriezelle 10 im Batterie-Modul 100 bei dem aktuellen Ladezustand imstande ist zu liefern, wobei sich je nach Anzahl an entsprechend verschalteten Batteriezellen 10 innerhalb eines Batterie-Moduls 100 eine entsprechende Modul-Spannung U100 ergibt, die über die Modul-Kontakte K1, K2 des Batterie-Moduls 100 vom Versorger abgegriffen werden kann.

Im (teil-)entladenen Zustand des Batterie-Moduls 100 bzw. der Batteriezellen 10 kann im normalen Betrieb (vor dem Recycling) an die Elektroden EN, EP der Batteriezellen 10 über die Modul-Kontakte K1, K2 des Batterie-Moduls 100 eine definierte Auflade-Spannung von einer Auflade-Spannungsquelle (nicht dargestellt) angelegt werden. Dabei wird über die Auflade-Spannungsquelle an die negative Elektrode EN der jeweiligen Batteriezelle 10 eine negative Spannung und an die positive Elektrode EP der jeweiligen Batteriezelle 10 eine positive Spannung angelegt, woraufhin die Zellen-Spannung U10 und damit die Modul-Spannung U100 wieder ansteigen.

Können derartige Batteriezellen 10 einzeln oder als Bestandteil eines Batterie-Moduls 100 nicht mehr weiterverwendet werden, werden diese einem Recyclingprozess mit mehreren Prozessschritten zugeführt, wobei die Batteriezelle(n) 10 in einem der Prozessschritte in einem Entladevorgang gezielt in einen im Wesentlichen vollständig entladenen Zustand (Tiefentladung) gebracht werden, um das elektrische Gefährdungspotential für die nachfolgenden Prozessschritte dauerhaft zu minimieren. Dieser Entladevorgang, der in der Entladungs-Anordnung 1 stattfindet, läuft gemäß Fig. 2 beispielweise wie folgt ab:
In einem anfänglichen Schritt ST0 wird zunächst mindestens eine Batteriezelle 10 zum Recyceln bereitgestellt, wobei die mindestens eine Batteriezelle 10 entweder separat als demontierte Batteriezelle 10 vorliegt, d.h. getrennt bzw. separiert von einem bereits demontierten Batterie-Modul 100, oder aber noch Bestandteil eines ebenfalls zu recycelnden Batterie-Moduls 100 ist, das ein oder mehrere Batteriezellen 10 aufweist. Das Batterie-Modul 100 kann wiederum Bestandteil eines Batterie-Packs sein.

Bei einer vorherigen Demontage werden im Rahmen des Recyclingprozesses Elektronik, Leiterplatten, Gehäuse, Kabel, Bleche etc. vom Batterie-Modul 100 entfernt, so dass im Idealfall nur noch die Batteriezelle(n) 10 vorhanden ist bzw. sind. Da die Batteriezelle(n) 10 im Batterie-Modul 100 in diesem Fall noch nicht entladen ist/sind, hat die Demontage, die meist manuell erfolgt, mit entsprechender Schutzkleidung und von einer elektrotechnisch unterwiesenen Person stattzufinden, um Gefahren durch Kurzschlüsse oder andere Spannungsüberträge zu entgehen.

Die mindestens eine bereitgestellte Batteriezelle 10 wird anschließend in einem ersten Schritt ST1 als separate Batteriezelle 10 oder als Bestandteil des Batterie-Moduls 100 in eine Konditionierungseinheit 2 in der Entladungs-Anordnung 1 gebracht. Die Konditionierungseinheit 2 dient vorrangig dazu, die zu recycelnde Batteriezelle 10 auf einer definierten Zellen-Temperatur T10 zu halten bzw. dafür zu sorgen, dass die Zellen-Temperatur T10 eine Grenz-Temperatur TG nicht überschreitet, wobei die Grenz-Temperatur TG beispielsweise 50°C betragen kann.

Dies wird vorzugsweise dadurch erreicht, dass sich in der Konditioniereinheit 2 ein bestimmtes Kühlmedium M bzw. ein Fluid, vorzugsweise Wasser, insbesondere deionisiertes Wasser, mit einer definierten Konditionier-Temperatur T2 befindet. Über das jeweilige Kühlmedium M kann Wärmeenergie, die in der oder den Batteriezellen 10 während des Entladevorganges entsteht, abgeleitet werden, so dass sich eine definierte Zellen-Temperatur T10 einstellen kann bzw. ein Überschreiten einer Grenz-Temperatur TG für die Batteriezellen 10 vermieden werden kann. Die mindestens eine Batteriezelle 10 bzw. das Batterie-Modul 100 mit der mindestens einen Batteriezelle 10 ist entsprechend derartig in die Konditioniereinheit 2 zu bringen, dass diese von dem Kühlmedium M zumindest teilweise, vorzugsweise vollständig umgeben wird. Dabei können je nach gewähltem Kühlmedium M auch die Elektroden EN, EP der jeweiligen Batteriezelle 10 in das Kühlmedium M eingebracht werden, ohne dass der Entladeprozess dadurch wesentlich beeinträchtigt wird.

Gleichwirkend zu Wasser können auch andere Medien M verwendet werden, über die die im Entladevorgang entstehende Wärme abgeführt werden kann. Als Nebeneffekt bewirkt das Wasser in der Konditioniereinheit 2 jedoch, dass entstehende Zellbrände unmittelbar nach ihrer Entstehung gelöscht werden können bzw. das Entstehen von Zellbränden bereits vorzeitig verhindert werden kann. Dies kann aber grundsätzlich auch durch andere Medien M ggf. auch in Verbindung mit weiteren Brandschutz-Vorkehrungen erreicht werden.

In einem zweiten Schritt ST2 wird über eine Entlade-Stromquelle 3 ein definierter Entladestrom I3 eingestellt und über die Elektroden EN, EP in die separaten oder die im Batterie-Modul 100 angeordneten Batteriezelle(n) 10 eingeleitet. Dazu wird ein positiver Anschluss AP der Entlade-Stromquelle 3, der auf einem positiven Spannungspotential liegt, mit der positiven Elektrode EP der jeweiligen Batteriezelle 10 und ein negativer Anschluss AN der Entlade-Stromquelle 3, der auf einem negativen Spannungspotential liegt, mit der negativen Elektrode EN der jeweiligen Batteriezelle 10 verbunden, um den eingestellten Entladestrom I3 von der positiven Elektrode EP zur negativen Elektrode EN (technische Stromrichtung) zu leiten.

Die Anschlüsse AP, AN der Entlade-Stromquelle 3 werden dabei vorzugsweise bereits vor dem Einbringen der Batteriezelle 10 bzw. des Batterie-Moduls 100 in das Kühlmedium M mit den Elektroden EN, EP der Batteriezelle 10 bzw. den Modul-Kontakten K1, K2 des Batterie-Moduls 100 verbunden und nach dem Einbringen dann entsprechend der Entladestrom 13 eingestellt. Weiterhin wird vor dem Einbringen der Batteriezelle 10 bzw. des Batterie-Moduls 100 in das Kühlmedium M beispielsweise eine Temperatursensorik an dieser bzw. diesem angebracht, um die Zellen-Temperatur T10 überwachen zu können.

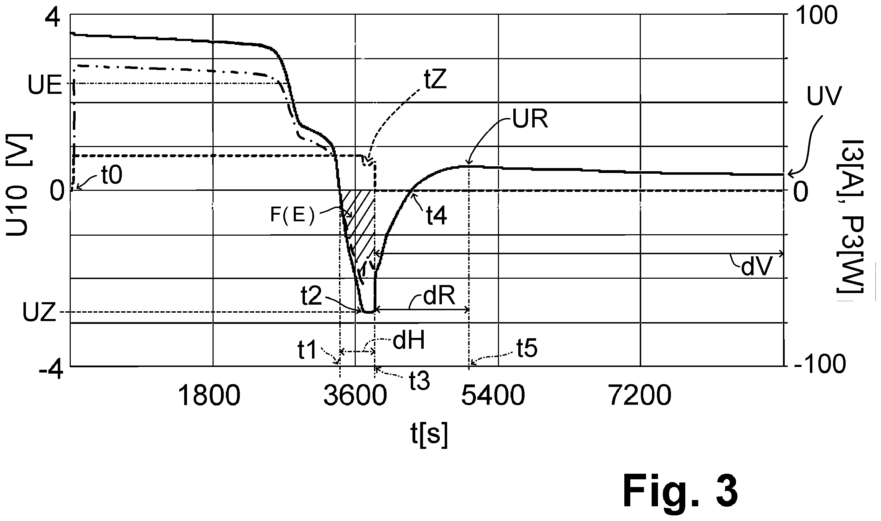

In Fig. 3 ist beispielhaft ein zeitlicher Verlauf der Zellen-Spannung U10 für eine einzelne bzw. eine separate Batteriezelle 10 (Pouch-Batteriezelle mit 60 Ah) dargestellt. Dabei wird zu einem Start-Zeitpunkt t0 ein Entladestrom I3 von ca. 20 A an der Entlade-Stromquelle 3 eingestellt, wobei gleichzeitig eine Zellen-Spannung U10 von ca. 3,5 V (Nennspannung) vorliegt, was zu einer Entlade-Leistung P3 führt. Infolge des eingestellten Entladestroms I3 wird die Batteriezelle 10 kontinuierlich entladen, wodurch die Zellen-Spannung U10 zunächst unterhalb die Entladeschluss-Spannung UE und nachfolgend zu einem ersten Zeitpunkt t1 auf 0 V absinkt.

Das Einstellen des Entladestroms I3 durch die Entlade-Stromquelle 3 und das Liefern dieses Entladestroms I3 an die zu recycelnde(n) Batteriezelle(n) 10 dient dabei zunächst der gezielten Tiefenentladung der Batteriezelle(n) 10, wobei aufgrund des Einbringens der Batteriezellen 10 in die Konditionierungseinheit 2 während dieser gezielten Tiefenentladung entstehende Wärme in das Kühlmedium M direkt abgeführt wird, um ein zu starkes Aufheizen bzw. Zellbrände zu vermeiden. Dabei soll durch das Absenken der Zellen-Spannung U10 auf U10 = 0 V gezielt eine Beschädigung der Batteriezellen 10 erreicht werden, um Relaxationseffekte in den Batteriezellen 10 zu unterbinden. Derartige Relaxationseffekte treten normalerweise aufgrund von in den Batteriezellen 10 ablaufenden chemischen Prozessen auf, wobei diese chemischen Prozesse allerdings trotz einer Schädigung der Batteriezellen 10 durch die Tiefenentladung auf 0 V nur teilweise verhindert werden können. Das hat zur Folge, dass die Zellen-Spannung U10 auch nach einer Tiefenentladung im Normalfall wieder auf ca. 50-75% der Nennspannung ansteigt. Dadurch geht selbst nach einer Tiefenentladung auch weiterhin noch ein elektrisches Gefährdungspotential von den Batteriezellen 10 aus, was in den nachfolgenden Schritten im Aufbereitungsprozess entsprechend zu berücksichtigen wäre.

Um dieses elektrische Gefährdungspotential jedoch weiter zu verringern bzw. komplett zu vermeiden, ist in einem dritten Schritt ST3 des erfindungsgemäßen Verfahrens vorgesehen, dass der Entladestrom I3 durch die Entlade-Stromquelle 3 ab dem ersten Zeitpunkt t1 (U10 = 0 V) auch weiterhin aufrechterhalten wird, wodurch sich aufgrund eines entsprechenden Energieeintrags in die Batteriezelle 10 eine negative Zellen-Spannung U10 ergibt, wie in Fig. 3 dargestellt. Die aufgrund dieses Energieeintrages entstehende Wärme in der Batteriezelle 10 kann direkt in das Kühlmedium M der Konditionierungseinheit 2 abgeführt werden, um ein zu starkes Aufheizen bzw. Zellbrände auch in dieser Phase des Verfahrens zu vermeiden.

Die Zellen-Spannung U10 sinkt nachfolgend weiter ab und erreicht in dem in Fig. 3 dargestellten Beispiel ab dem zweiten Zeitpunkt t2 einen Ziel-Spannungswert UZ von ca. -2.8 V. Durch das Aufrechthalten des Entladestroms I3 erfolgt also eine "verpolte" bzw. "negative" Aufladung der jeweiligen Batteriezelle 10, wodurch es zu einer weiteren Schädigung der einzelnen oder der im Batterie-Modul 100 angeordneten Batteriezelle(n) 10 kommt. Dadurch ergibt sich gegenüber einer Tiefenentladung auf U10 = 0 V eine zusätzliche Veränderung der Zellchemie, was wiederum zu einem weiteren Unterbinden von Relaxationseffekten in der jeweiligen Batteriezelle 10 führt.

Ab dem zweiten Zeitpunkt t2 bleibt die Zellen-Spannung U10 aufgrund einer versuchsbedingt festgelegten Begrenzungsspannung bei einer weiteren Aufrechterhaltung des Entladestroms I3 zunächst konstant bei diesem Ziel-Spannungswert UZ von -2.8 V. Der Ziel-Spannungswert UZ sowie auch der Spannungsverlauf allgemein sind hierbei insbesondere abhängig von der Art der verwendeten Batteriezelle 10 sowie des eingestellten Entladestromes I3. Wird statt der Zellen-Spannung U10 die Modul-Spannung U100 während eines Entladeprozesses einer in einem Batterie-Modul 100 angeordneten Batteriezelle 10 über die Zeit t aufgetragen, kann sich entsprechend der Verschaltung der Batteriezellen 10 im Batterie-Modul 100 auch ein anderer Ziel-Spannungswert UZ ergeben. Aus einem Vergleich der Figuren 3 (einzelne Pouch-Batteriezelle 10), 5 (Batterie-Modul 100 mit mehreren Batteriezellen 10) und 6 (einzelne prismatische Batteriezelle 10) wird dieser Unterschied in den Spannungsverläufen deutlich. Demnach ist je nach Art bzw. Typ und Verschaltung der bereitgestellten Batteriezelle(n) 10 auch eine Anpassung von Betriebsparametern für den erfindungsgemäßen Entladevorgang vorgesehen.

Um ausgehend von diesem Zustand sicherzustellen, dass Relaxationseffekte der Batteriezellen 10 nur noch geringfügig auftreten bzw. dass eine ausreichende und dauerhafte Beschädigung der Batteriezellen 10 durch dieses gezielte negative Aufladen der Batteriezelle 10 bewirkt wird, wird der Entladestrom I3 auch ab dem Erreichen des Ziel-Spannungswertes UZ bzw. ab dem zweiten Zeitpunkt t2 weiterhin aufrechterhalten. Der Entladestrom I3 wird dann an einem dritten Zeitpunkt t3 abgeschaltet, so dass der Entladestrom I3 insgesamt über eine Haltedauer dH, die zwischen dem ersten Zeitpunkt t1 und dem dritten Zeitpunkt t3 verläuft, in die jeweilige Batteriezelle 10 eingeleitet wird.

Über diese Haltedauer dH wird zur negativen bzw. verpolten Aufladung der Batteriezelle 10 eine gewisse Energiemenge E von der Batteriezelle 10 aufgenommen, die von dem zeitlichen Verlauf der Entlade-Leistung P3 abhängt. Aus der aufgenommenen Energiemenge E lässt sich dabei ableiten, zu welchem Grad es zu einer permanenten Veränderung der Zellchemie der jeweiligen Batteriezelle 10 und damit zu einer dauerhaften Schädigung der Batteriezelle 10 gekommen ist. Die Energiemenge E kann daher zur Festlegung des dritten Zeitpunktes t3 auch herangezogen werden, zu dem der Entladestrom I3 wieder abgeschaltet wird, d.h. als Indikator für eine gewisse Schädigung der Batteriezelle 10, die zu einem Unterbinden von Relaxationseffekten führt.

Die von der Batteriezelle 10 aufgenommene Energiemenge E ergibt sich dabei durch Integration des zeitlichen Verlaufes der in der Batteriezelle 10 umgesetzten Entlade-Leistung P3, also dem Produkt aus Zellen-Spannung U10 und Entladestrom I3 zwischen den Zeitpunkten t1 und t3, d.h. aus der Fläche F oberhalb des zeitlichen Verlaufes der Entlade-Leistung P3. Dabei kann für jede Art von zu recycelnder Batteriezelle 10 ein in vorherigen Versuchen ermittelter Energie-Grenzwert EG festgelegt werden, bei dessen Erreichen oder Überschreiten (E >= EG) von einer dauerhaften Schädigung der Batteriezelle 10 und damit von einer starken Minderung von Relaxationseffekten ausgegangen werden kann. Bei Erreichen dieses Energie-Grenzwertes EG wird dann der Entladestrom I3 abgeschaltet, d.h. der dritte Zeitpunkt t3 kann in Abhängigkeit der bereits aufgenommenen Energiemenge E festgelegt werden.

Nach Rücknahme des Entladestromes I3 steigt die Zellen-Spannung U10 aufgrund von immer noch auftretenden Relaxationseffekten wieder an, bis die Batteriezelle 10 zu einem vierten Zeitpunkt t4 wieder vollständig entladen ist (U10 = 0 V) und zu einem fünften Zeitpunkt t5 ein Relaxations-Maximum UR von ca. 0,55 V erreicht. Das Relaxations-Maximum UR ist dabei insbesondere abhängig von der Haltedauer dH bzw. der von der Batteriezelle 10 aufgenommenen Energiemenge E. Nachfolgend (t>t5) vermindert sich der Einfluss der Relaxation jedoch und eine Selbstentladung der Batteriezelle 10 setzt ein, woraufhin die Zellen-Spannung U10 wieder abfällt und nach einer definierten Zeit einen definierten Entlade-Wert UV von ca. 0,4V unterschreitet.

Durch den dritten Schritt ST3 bzw. die negative Aufladung während der Haltedauer dH kann also die in der Batteriezelle 10 nachfolgend verbleibende Zellen-Spannung U10 gezielt auf den Entlade-Wert UV oder darunter reduziert werden, wobei sich geringere Relaxations-Maxima UR als den üblichen 50-75% der Nennspannung ergeben. Das vom Batterie-Modul 100 bzw. den Batteriezellen 10 ausgehende elektrische Gefährdungspotential hat sich also bereits signifikant verringert.

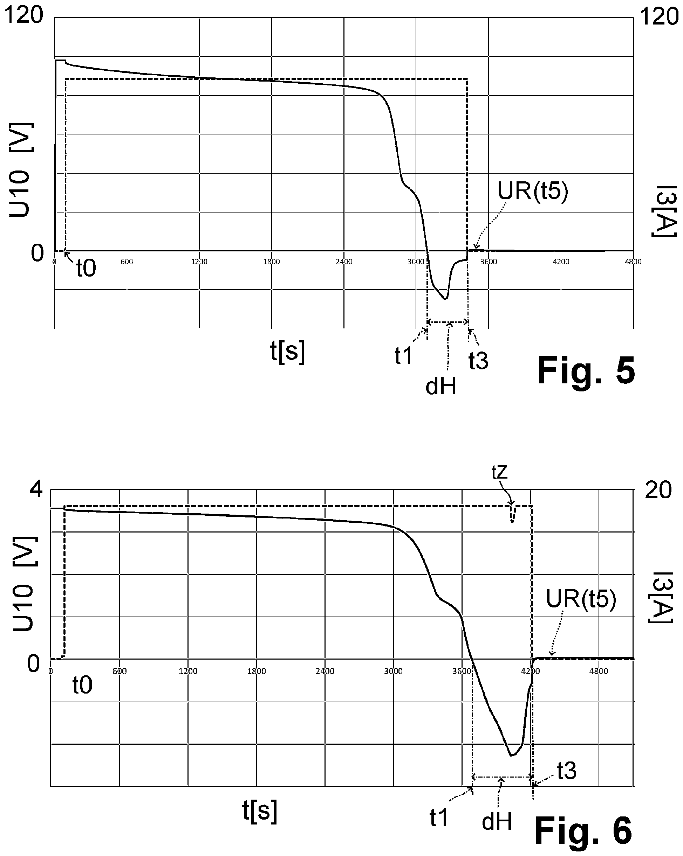

Ergänzend zur Energiemenge E kann als weiterer Indikator für die Abschaltung des Entladestroms I3 zum dritten Zeitpunkt t3 auch der zeitliche Verlauf des Entladestroms I3 oder der Entlade-Leistung P3 selbst herangezogen werden. Dabei ist in Fig. 3 und Fig. 6 zu sehen, dass während der negativen Aufladung der jeweiligen Batteriezelle 10 zwischen dem ersten Zeitpunkt t1 und dem dritten Zeitpunkt t3 zunächst ein konstanter positiver Entladestrom I3 vorliegt, der ab dem zweiten Zeitpunkt t2 abfällt und nachfolgend zu einem Zwischen-Zeitpunkt tZ wieder ansteigt. Entsprechend gilt dies gemäß Fig. 3 für die Entlade-Leistung P3. Dieser Stromverlauf bzw. Leistungsverlauf deutet darauf hin, dass sich die Zellchemie in der jeweiligen Batteriezelle 10 durch das negative Aufladen bereits verändert und zu einer Schädigung geführt hat.

Durch eine zeitliche Überwachung des Entladestroms I3 und/oder der Entlade-Leistung P3 kann also für die jeweilige Batteriezelle 10 eine ergänzende Überwachung des "Schädigungsprozesses" stattfinden, wobei z.B. überwacht wird, wie stark der Entladestrom I3 und/oder die Entlade-Leistung P3 abfällt und/oder nach dem Zwischen-Zeitpunkt tZ wieder ansteigt. Je nachdem, kann der Entladestrom I3 zu einer geeigneten Zeit t nach dem Zwischen-Zeitpunkt tZ abgeschaltet werden, um Relaxationseffekte nach Beendigung des Entladevorganges zu vermeiden. Wie in Figur 5 für den Entladevorgang bei einem Batterie-Modul 100 aus mehreren Batteriezellen 10 zu sehen, tritt ein Abfallen des Entladestromes I3 nicht immer auf, so dass diese zeitliche Überwachung des Entladestromes I3 neben der Energiemenge E nur als ergänzender Indikator für eine Schädigung der Batteriezelle 10 bzw. der Festlegung des dritten Zeitpunktes t3 herangezogen wird.

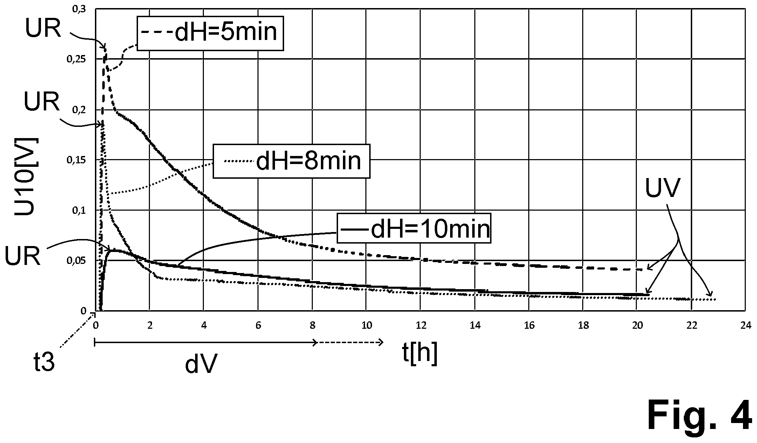

In Fig. 4 sind beispielhaft mehrere zeitliche Verläufe der Zellen-Spannung U10 im Leerlauf, also nach dem Abschalten des Entladestroms I3, dargestellt. Die einzelnen zeitlichen Verläufe resultieren aus unterschiedlichen von der jeweiligen Batteriezelle 10 aufgenommenen Energiemengen E und demnach aus unterschiedlichen Haltedauern dH (5min bzw. 8min bzw. 10min), innerhalb derer der Entladestrom I3 zur negativen Aufladung der jeweiligen Batteriezelle 10 aufrechterhalten wird. Dabei ist zu erkennen, dass in allen Spannungsverläufen das Relaxations-Maximum UR innerhalb einer Relaxationsdauer dR (Zeitraum zwischen t3 und t5) von unter einer Stunde nach Abschalten des Entladestroms I3 erreicht wird und sich die Zellen-Spannung U10 anschließend ausgehend von diesem Relaxations-Maximum UR unterschiedlich schnell abbaut. Des Weiteren ist ersichtlich, dass bei längerer Haltedauer dH bzw. bei höheren aufgenommenen Energiemengen E während des negativen Aufladens geringere Amplituden auftreten und für die Zellen-Spannung U10 auch nach Stunden geringe Werte zu erwarten sind.

In einem vierten Schritt ST4 kann also ergänzend vorgesehen sein, dass nach dem Abschalten des Entladestromes I3 zum dritten Zeitpunkt t3 eine festgelegte Verweildauer dV gewartet wird, bevor die separierte(n) oder die in dem Batterie-Modul 100 angeordnete(n) Batteriezelle(n) 10 in den weiteren Aufbereitungsschritten behandelt wird/werden. Dabei kann als Verweildauer dV beispielsweise die Relaxationsdauer dR festgelegt werden, d.h. es wird zumindest gewartet, bis zum fünften Zeitpunkt t5 das Relaxations-Maximum UR für die jeweilige Batteriezelle 10 erreicht wird, was vorzugsweise innerhalb von wenigen Minuten geschieht. Dies kann durch eine in-situ Messung der Zellen-Spannung U10 erfolgen, in der das Auftreten des Relaxations-Maximums UR festgestellt werden kann, oder es erfolgt eine Festlegung der Verweildauer dV bzw. der Relaxationsdauer dR anhand von Erfahrungswerten. Dabei ist zu berücksichtigen, dass die Relaxationsdauer dR von der Haltedauer dH bzw. der beim negativen Aufladen eingebrachten Energiemenge E abhängig ist. Ferner ergibt sich aber auch eine Abhängigkeit von dem eingestellten Entladestrom I3 und dem Zellen-Typ der verwendeten Batteriezelle(n) 10. So hat beispielsweise eine Batteriezelle 10 des Li-Ionen-Typs ein anderes Relaxationsverhalten als eine Batteriezelle 10 eines anderen Zellen-Typs. Dies ist bei der Festlegung aufgrund von Erfahrungswerten entsprechend zu berücksichtigen.

Gemäß den in Fig. 4 dargestellten zeitlichen Verläufen kann die Verweildauer dV aber auch derartig gewählt werden, dass z.B. zwischen 10 Stunden und 14 Stunden, vorzugsweise maximal 24 Stunden, gewartet wird, wobei nach dieser Zeitdauer angenommen werden kann, dass das elektrische Gefährdungspotential der Batteriezelle 10 ausreichend minimiert wurde, da die Zellen-Spannung U10 ausgehend vom Relaxations-Maximum UR durch die Selbstentladung bereits ausreichend abgefallen ist und sich nachfolgend an den definierten Entlade-(Soll)Wert UV angenähert bzw. diesen unterschritten hat. Vorzugsweise kann die Verweildauer dV auch in Abhängigkeit davon festgelegt werden, ob sich die Zellen-Spannung U10 nach Erreichen des Relaxations-Maximums UR zum fünften Zeitpunkt t5 innerhalb einer vorgegebenen Toleranz, z.B. 10%, an einen für den jeweiligen Zellen-Typ definierten Entlade-(Soll)Wert UV angenähert hat. Dies kann aufgrund von Erfahrungswerten vorab festgelegt werden oder aber durch eine in-situ-Messung während des Entladeprozesses.

Gemäß einer weiteren Alternative kann die Verweildauer dV aber auch nur den Zeitraum zwischen dem dritten Zeitpunkt t3 und dem vierten Zeitpunkt t4 überbrücken, d.h. es wird nur solange gewartet, bis die negativ aufgeladene Batteriezelle 10 wieder entladen ist, was vorzugsweise innerhalb weniger Minuten der Fall ist. Nachfolgend wird dann davon ausgegangen, dass das Ansteigen der Zellen-Spannung U10 auf das zu erwartende Relaxations-Maximum UR kein erhöhtes elektrisches Gefährdungspotential mehr mit sich bringt.

Für nachfolgende Prozessschritte im Aufbereitungsprozess kann die separate oder die im Batterie-Modul 100 angeordnete Batteriezelle 10 also durch den vorbeschriebenen Entladevorgang mit einer zwischenzeitlichen negativen Aufladung unter vollkommen anderen Anforderungen, insbesondere mit deutlich geringeren Schutzvorkehrungen, behandelt werden. So kann beispielsweise auf ein Schutzgas komplett verzichtet werden, da Gefahren durch Kurzschlüsse oder andere Spannungsüberträge weitestgehend unterbunden werden können, da gemäß der in Fig. 3 - 6 dargestellten Spannungsverläufe nach der erfolgten negativen Aufladung über den Entladestrom I3 nur eine sehr geringe elektrische Gefährdung ausgeht. Auch auf entsprechende Schutzkleidung des Personals kann bei diesen geringen Werten für die Zellen-Spannung U10 nach dem Entladevorgang verzichtet werden.

Wenn als Kühlmedium M Wasser zum Konditionieren der Batteriezellen 10 bzw. der Batterie-Module 100 verwendet wird, ist zudem kein aufwändiger Prozess zum Entfernen des Kühlmediums M vor der weiteren Aufbereitung nötig, da von dem Wasser selbst keine Gefährdung ausgeht. Unter Umständen kann ein weiterer Trocknungsprozess vorgesehen sein, um ein Verdampfen des Kühlmediums M zu erreichen. Dabei kann auch die nach einer negativen Aufladung verbleibende Restwärme der Batteriezellen 10 bzw. des Batterie-Moduls 100 noch zur Trocknung verwendet werden. Dazu kann die Batteriezelle 10 bzw. das Batterie-Modul 100 auch bereits vor dem Ablauf der festgelegten Verweildauer dV aus dem Kühlmedium M entnommen werden, beispielsweise automatisiert.

Findet eine Entladung der im Batterie-Modul 100 angeordneten Batteriezellen 10 statt, wird in der nachfolgenden Aufbereitung jedes entladene Batterie-Modul 100 zunächst demontiert, d.h. Elektronik, Leiterplatten, Gehäuse, Kabel, Bleche etc. werden entfernt, so dass dann im Idealfall nur noch die entladenen Batteriezelle(n) 10 vorhanden ist bzw. sind. Durch die vorbeschriebene Entladung findet dieser Demontageprozess bereits mit geringerem elektrischen Gefährdungspotential statt, so dass ggf. auf Schutzkleidung des Personals verzichtet werden kann.

Anschließend findet an den entladenen und demontierten Batteriezellen 10 beispielsweise eine thermische Vorbehandlung statt, bei der die Batteriezellen 10 derartig thermisch behandelt werden, dass zumindest einzelne Bestandteile des in den Batteriezellen 10 vorhandenen Elektrolyten verdampfen, um auch das chemische Gefährdungspotential zu senken. Nach der thermischen Vorbehandlung folgt in einem weiteren Schritt ein mechanischer Zerkleinerungs-Prozess, in dem die thermisch vorbehandelten Batteriezellen 10 mechanisch zerkleinert werden. Nachfolgend können ein oder mehrere Klassierungs-Schritte stattfinden sowie ggf. eine Nachzerkleinerung. Dies dient dazu, die einzelnen Bestandteile des zerkleinerten Gutes zu sortieren, um diese entsprechend weiterverwenden bzw. adäquat entsorgen zu können.

### Bezugszeichenliste

- 1: Entladungs-Anordnung
- 2: Konditionierungseinheit
- 3: Entlade-Stromquelle
- 10: Batteriezelle
- 100: Batterie-Modul
- AN: negativer Anschluss
- AP: positiver Anschluss
- dH: Haltedauer
- dR: Relaxationsdauer
- dV: Verweildauer
- E: Energiemenge
- EG: Energie-Grenzwert
- EP: positive Elektrode des Batterie-Moduls 100
- EN: negative Elektrode des Batterie-Moduls 100
- F: Fläche
- I3: Entladestrom
- K1, K2: Modul-Kontakte
- M: Kühlmedium
- P3: Entlade-Leistung
- t: Zeit
- t0: Start-Zeitpunkt
- t1: erster Zeitpunkt
- t2: zweiter Zeitpunkt
- t3: dritter Zeitpunkt
- t4: vierter Zeitpunkt
- t5: fünfter Zeitpunkt
- tZ: Zwischen-Zeitpunkt
- T2: Konditionier-Temperatur
- T10: Zellen-Temperatur
- TG: Grenz-Temperatur
- U10: Zellen-Spannung
- U100: Modul-Spannung
- UE: Entladeschluss-Spannung
- UR: Relaxations-Maximum
- UV: Entlade-Wert
- UZ: Ziel-Spannungswert

- ST1, ST2, ST3, ST4, ST5: Schritte des Verfahrens

## Patentansprüche

1. Verfahren zum Entladen mindestens einer Batteriezelle (10) oder eines Batterie-Moduls (100) mit mindestens einer Batteriezelle (10), mit mindestens den folgenden Schritten:
- Bereitstellen der mindestens einen Batteriezelle (10) als separate Batteriezelle (10) oder als Bestandteil des Batterie-Moduls (100) (ST0);
- Bringen der mindestens einen bereitgestellten Batteriezelle (10) in eine Konditionierungseinheit (2) derartig, dass die mindestens eine Batteriezelle (10) von einem Kühlmedium (M) in der Konditionierungseinheit (2) zumindest teilweise umgeben ist, um die Zellen-Temperatur (T10) der mindestens einen Batteriezelle (10) unterhalb einer Grenz-Temperatur (TG) zu halten (ST1);
- Einstellen eines Entladestroms (I3) durch eine mit der mindestens einen Batteriezelle (10) verbundenen Entlade-Stromquelle (3) und Einleiten des Entladestroms (I3) in die mindestens eine Batteriezelle (10), so dass sich die Batteriezelle (10) entlädt (ST2);
- Aufrechthalten des Entladestroms (I3) derartig, dass eine Zellen-Spannung (U10) der mindestens einen Batteriezelle (10) negativ wird, wobei das Einleiten des Entladestroms (I3) in die mindestens eine Batteriezelle (10) abgebrochen wird, wenn die Zellen-Spannung (U10) für eine definierte Haltedauer (dH) negativ war und/oder wenn eine Energiemenge (E), die während des Vorliegens der negativen Zellen-Spannung (U10) in die mindestens eine Batteriezelle (10) eingeleitet wird, einen festgelegten Energie-Grenzwert (EG) erreicht oder überschreitet (ST3);
- Warten für eine Verweildauer (dV), nachdem das Einleiten des Entladestroms (I3) abgebrochen wurde (ST4).

2. Verfahren nach einem der vorhergehenden Ansprüche, **dadurch gekennzeichnet, dass** die Haltedauer (dH) und/oder der Energie-Grenzwert (EG) und/oder die Verweildauer (dV) in Abhängigkeit eines Zellen-Typs der zu entladenen Batteriezelle (10) und/oder in Abhängigkeit des von der Entlade-Stromquelle (3) eingestellten Entladestroms (I3) und/oder in Abhängigkeit eines zeitlichen Verlaufes des gelieferten Entladestroms (I3) festgelegt wird.

3. Verfahren nach einem der vorhergehenden Ansprüche, **dadurch gekennzeichnet, dass** die Verweildauer (dV) in Abhängigkeit davon festgelegt wird, ob die Zell-Spannung (U10) der mindestens einen Batteriezelle (10) einen festgelegten Entlade-Wert (UV) erreicht oder unterschritten hat.

4. Verfahren nach Anspruch 3, **dadurch gekennzeichnet, dass** der Entlade-Wert (UV) kleiner gleich 0,1V, vorzugsweise kleiner gleich 0,05V ist.

5. Verfahren nach einem der vorhergehenden Ansprüche, **dadurch gekennzeichnet, dass** die Verweildauer (dV) in Abhängigkeit einer Relaxationsdauer (dR) festgelegt wird, innerhalb derer die Zellen-Spannung (U10) auf ein Relaxations-Maximum (UR) ansteigen wird, nachdem das Einleiten des Entladestroms (I3) abgebrochen wurde.

6. Verfahren nach Anspruch 5, **dadurch gekennzeichnet, dass** die Relaxationsdauer (dR) in Abhängigkeit eines Zellen-Typs der zu entladenen Batteriezelle (10) und/oder in Abhängigkeit des von der Entlade-Stromquelle (3) eingestellten Entladestroms (I3) eingelesen wird oder durch Messen der Zellen-Spannung (U10) ermittelt wird, nachdem das Einleiten des Entladestroms (I3) abgebrochen wurde.

7. Verfahren nach einem der vorhergehenden Ansprüche, **dadurch gekennzeichnet, dass** als Verweildauer (dV) maximal 24h, vorzugsweise weniger als 1h, insbesondere zwischen 5min und 30min, festgelegt werden.

8. Verfahren nach einem der vorhergehenden Ansprüche, **dadurch gekennzeichnet, dass** die von der mindestens einen Batteriezelle (10) aufgenommene Energiemenge (E) durch Integration eines zeitlichen Verlaufes einer an der Batteriezelle (10) umgesetzten Entlade-Leistung (P3) ab einem ersten Zeitpunkt (t1), an dem die Zellen-Spannung (U10) negativ wird, ermittelt wird.

9. Verfahren nach einem der vorhergehenden Ansprüche, **dadurch gekennzeichnet, dass** die mindestens eine Batteriezelle (10) unmittelbar nachdem das Einleiten des Entladestroms (I3) abgebrochen wurde oder nach Ablauf der Relaxationsdauer (dR) oder nach Ablauf der Verweildauer (dV) aus der Konditionierungseinheit (2) entnommen wird.

10. Verfahren nach einem der vorhergehenden Ansprüche, **dadurch gekennzeichnet, dass** die Restwärme, die nachdem das Einleiten des Entladestroms (I3) abgebrochen wurde in der mindestens einen Batteriezelle (10) verbleibt, zur Trocknung der mindestens einen Batteriezelle (10) verwendet wird.

11. Verfahren nach einem der vorhergehenden Ansprüche, **dadurch gekennzeichnet, dass** die Entlade-Stromquelle (3) vor dem Einbringen der mindestens einen Batteriezelle (10) in die Konditionierungseinheit (2) mit der mindestens einen Batteriezelle (10) energieleitend verbunden wird.

12. Verfahren nach einem der vorhergehenden Ansprüche, **dadurch gekennzeichnet, dass** für den Fall,
- dass die mindestens eine Batteriezelle (10) separat bereitgestellt wird, eine Demontage bereits zuvor stattfindet, oder
- dass die mindestens eine Batteriezellen (10) als Bestandteil eines Batterie-Moduls (100) bereitgestellt wird, eine Demontage frühestens nachdem das Einleiten des Entladestroms (I3) abgebrochen wurde stattfindet.

13. Verfahren nach einem der vorhergehenden Ansprüche, **dadurch gekennzeichnet, dass** als Kühlmedium (M) in der Konditionierungseinheit (2) Wasser, insbesondere deionisiertes Wasser, verwendet wird.

14. Entladungs-Anordnung (1) zum Entladen von Batteriezellen (10), beispielsweise als Bestandteil einer Aufbereitungs-Anordnung zum Recyceln von Batteriezellen (10), wobei die Batteriezelle (10) eine separate Batteriezelle (10) oder Bestandteil eines Batterie-Moduls (100) ist, mindestens aufweisend:
- eine Konditionierungseinheit (2) mit einem Kühlmedium (M) zum Aufnehmen mindestens einer bereitgestellter Batteriezelle (10) derartig, dass die mindestens eine Batteriezelle (10) von dem Kühlmedium (M) in der Konditionierungseinheit (2) zumindest teilweise umgeben ist, so dass die Zellen-Temperatur (10) der mindestens einen Batteriezelle (10) während des Entladens unterhalb einer Grenz-Temperatur (TG) gehalten werden kann;
- eine Entlade-Stromquelle (3) mit einem positiven Anschluss (AP) und einem negativen Anschluss (AN), die ausgebildet ist, einen Entladestrom (I3) einzustellen und in eine mit der Entlade-Stromquelle (3) verbindbare Batteriezelle (10) einzuleiten, so dass die Batteriezelle (10) entladen werden kann,
wobei die Entlade-Stromquelle (3) ferner ausgebildet ist, den Entladestrom (13) derartig zu halten, dass eine Zellen-Spannung (U10) der mindestens einen Batteriezelle (10) negativ wird, und das Einleiten des Entladestroms (I3) in die mindestens eine Batteriezelle (10) abzubrechen, wenn die Zellen-Spannung (U10) für eine definierte Haltedauer (dH) negativ ist und/oder wenn eine Energiemenge (E), die während des Vorliegens der negativen Zellen-Spannung (U10) in die mindestens eine Batteriezelle (10) einleitbar ist, einen festgelegten Energie-Grenzwert (EG) erreicht oder überschreitet.

## Claims

1. Method for discharging at least one battery cell (10) or a battery module (100) including at least one battery cell (10), including at least the following steps:
- providing the at least one battery cell (10) as a separate battery cell (10) or as a component of the battery module (100) (ST0);
- moving the at least one battery cell (10) provided into a conditioning unit (2) such that the at least one battery cell (10) is surrounded in the conditioning unit (2) at least in part by a cooling agent (M), to maintain the cell temperature (T10) of the at least one battery cell (10) below a temperature limit (TG) (ST1);
- setting a discharging current (I3) by a discharge current source (3) connected to the at least one battery cell (10) and introducing the discharge current (I3) into the at least one battery cell (10) so that the battery cell (10) discharges (ST2);
- maintaining the discharging current (I3) such that a cell voltage (U10) of the at least one battery cell (10) becomes negative, whereby the introducing of discharging current (I3) into the at least one battery cell (10) is interrupted when the cell voltage (U10) has been negative for a defined holding period (dH) and/or when an amount of energy (E), which is introduced into the at least one battery cell (10) while the cell voltage (U10) is negative, reaches or exceeds a pre-determined energy threshold value (EG) (ST3);
- waiting for a holding time (dV), after the introduction of the discharging current (I3) was interrupted (ST4).

2. Method according to one of the above claims, **characterised in that** the holding period (dH) and/or the energy threshold value (EG) and/or the holding time (dV) is determined depending on a type of cell of the battery cell (10) to be discharged and/or depending on the discharging current (I3) set by the discharge current source (3) and/or depending on a chronological sequence of the discharging current (I3) supplied.

3. Method according to one of the above claims, **characterised in that** the holding time (dV) is determined depending on whether the cell voltage (U10) of the at least one battery cell (10) has reached or fallen below a pre-determined discharging value (UV).

4. Method according to claim 3, **characterised in that** the discharging value (UV) is smaller than or equal to 0.1V, preferably smaller than or equal to 0.05V.

5. Method according to one of the above claims, **characterised in that** the holding time (dV) is determined depending on a relaxation time (dR) within which the cell voltage (U10) will rise up to a relaxation maximum (UR) after the introduction of the discharging current (I3) was interrupted.

6. Method according to claim 5, **characterised in that** the relaxation time (dR) is read-in depending on a type of cell of the battery cell (10) to be discharged and/or depending on the discharging current (I3) set by the discharge current source (3) or determined by measuring the cell voltage (U10) after the introduction of the discharging current (I3) was interrupted.

7. Method according to one of the above claims, **characterised in that** a maximum of 24h, preferably less than 1h, in particular, between 5min and 30min, is determined as holding time (dV).

8. Method according to one of the above claims, **characterised in that** the amount of energy (E) received by the at least one battery cell (10) is determined by means of integration of a chronological sequence of a discharging power (P3) transacted at the battery cell (10) from a first point in time (t1) where the cell voltage (U10) becomes negative.

9. Method according to one of the above claims, **characterised in that** the at least one battery cell (10) is removed from the conditioning unit (2) immediately after the introduction of the discharging current (I3) was interrupted or upon expiration of the relaxation time (dR) or upon expiration of the holding time (dV).

10. Method according to one of the above claims, **characterised in that** the residual heat remaining in the at least one battery cell (10 after the introduction of the discharging current (I3) was interrupted is used for drying the at least one battery cell (10).

11. Method according to one of the above claims, **characterised in that**, prior to moving the at least one battery cell (10) into the conditioning unit (2), the discharge current source (3) is energy conductively connected to the at least one battery cell (10).

12. Method according to one of the above claims, **characterised in that** in the event,
- that the at least one battery cell (10) is provided separately, a previous disassembly is carried out, or
- that the at least one battery cell (10) is provided as a component of a battery module (100), a disassembly is carried out, at the earliest, after the introduction of the discharging current (I3) was interrupted.

13. Method according to one of the above claims, **characterised in that** water, in particular, deionised water, is utilized as cooling agent (M) in the conditioning unit (2).

14. Discharge system (1) for discharging battery cells (10), for example, as a component of a reprocessing arrangement for recycling battery cells (10), where the battery cell (10) is a separate battery cell (10) or a component of a battery module (100), comprising at least:
- one conditioning unit (2) including a cooling agent (M) for receiving at least one battery cell (10) provided such that the at least one battery cell (10) is surrounded in the conditioning unit (2) at least in part by the cooling agent so that to the cell temperature (10) of the at least one battery cell (10) can be maintained below a temperature limit (TG) during discharging;
- one discharge current source (3) including a positive connection (AP) and a negative connection (AN), configured to set a discharging current (I3) and to introducing it into a battery cell (10) connectable to the discharge current source (3) so that the battery cell (10) can be discharged,
where the discharge current source (3) is further configured to maintain the discharging current (I3) such that a cell voltage (U10) of the at least one battery cell (10) becomes negative and to interrupt the introduction of the discharging current (I3) into the at least one battery cell (10) when the cell voltage (U10) is negative for a defined holding period (dH) and/or when an amount of energy (E), that can be introduced into the at least one battery cell (10) while the cell voltage (U10) is negative, reaches or exceeds a pre-determined energy threshold value (EG).

## Revendications

1. Procédé destiné à décharger au moins une cellule de batterie (10) ou un module de batterie (100) comportant au moins une cellule de batterie (10), ledit procédé comprenant au moins les étapes suivantes :
- fournir l'au moins une cellule de batterie (10) sous forme d'une cellule de batterie séparée (10) ou sous forme de composant du module de batterie (100) (ST0),
- mettre l'au moins une cellule de batterie (10) fournie dans une unité de conditionnement (2) de manière que l'au moins une cellule de batterie (10) est au moins partiellement entourée par un fluide de refroidissement (M) dans l'unité de conditionnement (2) pour maintenir la température de cellule (T10) de l'au moins une cellule de batterie (10) au-dessous d'une température limite (TG), (ST1),
- régler un courant de décharge (I3) par l'intermédiaire d'une source de courant de décharge (3) reliée à l'au moins une cellule de batterie (10) et introduction du courant de décharge (I3) dans l'au moins une cellule de batterie (10) de manière que la cellule de batterie (10) se décharge (ST2),
- maintien du courant de décharge (I3) de manière qu'une tension de cellule (U10) de l'au moins une cellule de batterie (10) devient négative, l'introduction du courant de décharge (I3) dans l'au moins une cellule de batterie (10) étant interrompue lorsque la tension de cellule (U10) a été négative pour un temps de maintien définie (dH) et/ou lorsqu'une quantité d'énergie (E), qui est introduite en présence d'une tension de cellule négative (U10) dans l'au moins une cellule de batterie (10), atteint ou franchit une valeur d'énergie limite fixée (EG), (ST3),
- attente pendant un temps de séjour (dV), après interruption de l'introduction du courant de décharge (I3), (ST4).

2. Procédé suivant une des revendications précédentes, **caractérisé en ce que** le temps de maintien (dH) et/ou la valeur d'énergie limite (EG) et/ou le temps de séjour (dV) sont déterminés en fonction d'un type de cellule de la cellule de batterie à décharger (10) et/ou en fonction du courant de décharge (I3) réglé par la source de courant de décharge (3) et/ou en fonction d'une évolution temporelle du courant de décharge fourni (I3).

3. Procédé suivant une des revendications précédentes, **caractérisé en ce que** le temps de séjour (dV) est fixé selon que la tension de cellule (U10) de l'au moins une cellule de batterie (10) atteint ou reste inférieure à une valeur de décharge fixée (UV).

4. Procédé suivant la revendication 3, **caractérisé en ce que** la valeur de décharge (UV) est inférieure ou égale à 0,1V, de préférence inférieure ou égale à 0,05V.

5. Procédé suivant une des revendications précédentes, **caractérisé en ce que** le temps de séjour (dV) est fixé en fonction d'un temps de relaxation (dR), à l'intérieur de laquelle la tension de cellule (U10) va augmenter à un maximum de relaxation (UR) lorsque l'introduction du courant de décharge (I3) a été interrompue.

6. Procédé suivant la revendication 5, **caractérisé en ce que** le temps de relaxation (dR) est mis en mémoire en fonction d'un type de cellule de la cellule de batterie à décharger (10) et/ou en fonction du courant de décharge (I3) réglé par la source de courant de décharge (3) ou déterminé par mesure de la tension de cellule (U10), après interruption de l'introduction du courant de décharge (I3).

7. Procédé suivant une des revendications précédentes, **caractérisé en ce que** comme temps de séjour (dV) sont fixés au maximum 24 heures, de préférence moins de 1 h, en particulier entre 5 et 20 minutes.

8. Procédé suivant une des revendications précédentes, **caractérisé en ce que** la quantité d'énergie (E) reçue par l'au moins une cellule de batterie (10) est évaluée par intégration d'une évolution temporelle d'une puissance de décharge (P3) appliquée sur une cellule de batterie (10) à partir d'un premier moment (t1), auquel la tension de cellule (U10) devient négative.

9. Procédé suivant une des revendications précédentes, **caractérisé en ce que** l'au moins une cellule de batterie (10) est enlevée de l'unité de conditionnement immédiatement après interruption de l'introduction du courant de décharge (I3) ou après expiration du temps de relaxation (dR) ou après expiration du temps de séjour (dV).

10. Procédé suivant une des revendications précédentes, **caractérisé en ce que** la chaleur résiduelle qui demeure dans l'au moins une cellule de batterie (10) après interruption de l'introduction du courant de décharge (I3) est utilisée pour le séchage de l'au moins une cellule de batterie (10).

11. Procédé suivant une des revendications précédentes, **caractérisé en ce que** la source de courant de décharge (3) est reliée de manière conductrice d'énergie à l'au moins une cellule de batterie (10) préalablement à l'insertion de l'au moins une cellule de batterie (10) dans l'unité de conditionnement (2).

12. Procédé suivant une des revendications précédentes, **caractérisé en ce que** pour le cas,
où l'au moins une cellule de batterie (10) est fournie séparément, un démontage a lieu au préalable, ou
où l'au moins une cellule de batterie (10) est fournie comme composant d'un module de batterie (100), un démontage a lieu au plus tôt après interruption de l'introduction du courant de décharge (I3).

13. Procédé suivant une des revendications précédentes, **caractérisé en ce que** dans l'unité de conditionnement, de l'eau est utilisé comme fluide de refroidissement (M), en particulier de l'eau déminéralisée.

14. Agencement de décharge (1) destiné au déchargement de cellules de batterie (10), par exemple sous forme de composant d'un agencement de traitement pour le recyclage de cellules de batterie (10), la cellule de batterie (10) étant une cellule de batterie séparée (10) ou un composant d'un module de batterie (100), présentant au moins :
- une unité de conditionnement (10) avec un milieu de refroidissement (M) pour recevoir au moins une cellule de batterie fournie (10) de manière que l'au moins une cellule de batterie (10) est entourée au moins partiellement par le milieu de refroidissement (M) dans l'unité de conditionnement (2) de manière que la température de cellule (10) de l'au moins une cellule de batterie (10) peut être maintenue pendant la décharge au-dessous d'une température limite (TG),
- une source de courant de décharge (3) avec une borne positive (AP) et une borne négative (AN), la source de courant de décharge (3) étant conçue pour régler un courant de décharge (I3) et introduire celui-ci dans une cellule de batterie (10) pouvant être reliée à la source de courant de décharge (3) de manière que la cellule de batterie (10) peut être déchargée, la source de courant de décharge (3) étant en plus conçue pour maintenir le courant de décharge (I3) de manière qu'une tension de cellule (U10) de l'au moins une cellule de batterie (10) devient négative, et pour interrompre l'introduction du courant de décharge (I3) dans l'au moins une cellule de batterie (10) lorsque la tension de cellule (U10) est négative pendant un temps de maintien (dH) et/ou lorsqu'une quantité d'énergie (E) pouvant être introduite dans l'au moins une cellule de batterie (10) en présence de la tension de cellule (U10) négative atteint ou franchit une valeur limite d'énergie (EG) fixée.
